# EUROPEAN PATENT APPLICATION

(11) **EP 2 182 718 A1**
(43) Date of publication of application: **05.05.2010**
(21) Application number: 08018857.6
(22) Date of filing: 29.10.2008
(51) Int. Cl.: H04N 5/225

(54) **Multi-lens image sensor module**

(71) Applicant: Weistech Technology Co., Ltd., Chung Ho 235 T'ai pei (TW)
(72) Inventor: Hsu, Wei, Chung Ho City 235 Taipei County (TW)
(74) Representative: Radünz, Ingo

(57) **Abstract**

The present invention relates to a multi-lens image sensor module utilizing optical fibers as communication paths between the multiple lenses and the image sensor chip formed on the base board. The image sensor chip has an image sensing area formed thereon. The image sensor module of the present invention uses the lid for image division to separate the image sensing area into a plurality of subareas. Each divided subarea of the sensing area is corresponding to one lens.

## Description

### TECHNICAL FIELD

The present invention generally relates to an image sensor module and, more particularly, to a multi-lens image sensor module.

### BACKGROUND

The current techniques of image sensor modules are broadly applied in various fields, such as a digital still camera, a digital video camera, a videophone, and a video conference, and the module has an image sensor semiconductor chip packaged inside an optical device to sense and to capture optical image signals, following that the module converts an optical image signal to an electric signal to be delivered to the circuit board and enables the optical image signals to be recognizable, processed, or stored.

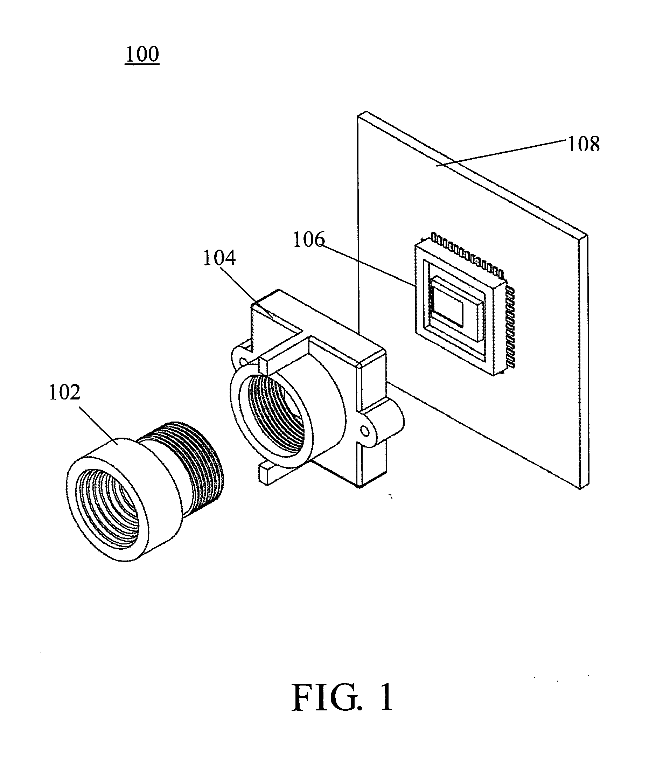

A commonly used conventional image sensor module 100 is schematically depicted in the simplified illustration of FIG. 1. The image sensor module 100 comprises a lens 102, a lens holder 104, an image sensor chip 106, and a base board 108. The image sensor chip 106 having an image sensing area is formed on the base board 108. The lens holder 104 covering the image sensor chip is mounted on the base board 108. The lens 102 aligning with the image sensing area of the image sensor chip is set in the lens holder 104. Through the lens 102, the image sensor chip is able to capture the external image signals.

For example, similar image sensor module structure has been disclosed in TW425042. It discloses a CCD and CMOS image capturing module, which comprises a circuit board having a CCD and CMOS image sensor device and related electronic devices, and a lens holder, whose outer peripheral size is the same as that of the image sensor device, being set on the top surface of the said image sensor device. By aligning the lens holder with the outer edge of the image sensor device, and by the planar contact between the bottom surface of the holder and the top surface of the image sensor device, there is no position difference and no angle difference produced between the axis of the holder and the center of the image sensor device in order to prevent images from the aberration.

A compact camera module has been disclosed in TW-1297920, comprising mainly a substrate, a sensor chip and a lens module. The substrate has a surface defining a chip-attached region and a module-secured region for attaching the sensor chip and securing the lens module respectively, further defining a check point within the chip-attached region. Therein the module-secured region encloses the chip-attached region. The substrate includes a plurality of connecting pads and a plurality of check bars away from the chip-attached region, wherein the perpendicular bisectors of the check bars have a cross point aligned with the check point. Accordingly, a self-check step can be performed to check the center location of the sensor region of the sensor chip by the cross point after chip attaching.

An imaging module with chip on glass configuration has been disclosed in TW-M250470, comprising a filter and a lens holder with a base and a lens-fastening portion. The base combines a plurality of electrically connecting means. The filter disposes between the base and the lens-fastening portion. The filter has a plurality of circuits which are connecting to the electrically connecting means. An image sensing chip is a flip chip on the filter. A first sealing compound disposes between the image sensing chip and the filter for sealing sensing surface of the image sensing chip.

All the conventional techniques described above have not disclosed an image sensor module with a complete set of directions of a 360-degree visual angle.

### BRIEF DESCRIPTION OF THE DRAWINGS

It is believed that the present invention and its several attendant advantages and features will be understood from the proceeding description and the accompanying drawings.

**Figure 1** is a schematic diagram of a preferred embodiment of a conventional image sensor module;

**Figure 2** is an illustration of a preferred embodiment of the multi-lens image sensor module of the present invention;

**Figure 3** is a parts breakdown illustration of the multi-lens image sensor module of the present invention; and

**Figure 4** is a parts breakdown illustration of the multi-lens image sensor module of the present invention.

### SUMMARY

According to the description above, the aspect of the present invention herein is to provide a multi-lens image sensor module.

Another aspect of the present invention is to provide an image sensor module having a 360-degree large visual angle.

Another aspect of the present invention is to utilize an optical system as communication paths between the lenses and the image sensing area to transmit the image signals.

Another aspect of the present invention is to utilize a lid for image division to separate the image sensing area into a plurality of subareas. Each divided subarea of the sensing area is corresponding to one lens and one optical communication path.

The present invention herein is to disclose a multi-lens image sensor module, which comprises: a base board; an image sensor chip having an image sensing area formed thereon bonded to the base board; a lid formed on the base board, covering the image sensor chip thereon, and the lid having a plurality of openings corresponding to the image sensing area that is divided into a plurality of subareas according to the plurality of the openings; an optical system coupled to the lid; and a plurality of lenses coupled to the optical system, transmitting image signals to the image sensing area via the optical system.

The present invention herein also discloses a multi-lens image sensor module, which comprises: a base board; an image sensor chip having an image sensing area formed thereon bonded to the base board; a lid formed on the base board, covering the image sensor chip thereon, and the lid having a plurality of openings corresponding to the image sensing area that is divided into a plurality of subareas according to the plurality of the openings; a set of glasses arranged on the plurality of the openings; an optical fiber output fixed mount covering the plurality of the openings of the lid; a plurality of optical fiber input fixed mounts connected to the optical fiber output fixed mount via optical fibers; and a plurality of lenses separately arranged in the plurality of the optical fiber input fixed mounts, transmitting image signals to the image sensing area via optical fibers.

The present invention discloses the multi-lens image sensor module, wherein the base board is a multilayer PCB (Printed Circuit Board). The said image sensor chip may include a CCD (Charge-Coupled Device) or a CMOS (Complementary Metal-Oxide-Semiconductor) sensor chip. The number of the said lenses is at least three to enable a 360-degree visual angle of the image sensor module.

The multi-lens image sensor module of the present invention divides the image sensing area into a plurality of individual subareas, and each divided subarea of the sensing area is corresponding to one lens and one optical fiber communication path. In this way, only one image sensor module is required to obtain a 360-degree large visual angle, hence saving the number of the image sensor modules. Furthermore, the multi-lens image sensor module of the present invention uses optical fibers as communication paths between the lenses and the image sensing area of the image sensor module to transmit optical signals, thus extending the distance between the image sensor module and the lenses.

### DETAILED DESCRIPTION

The invention hereinafter will be described in greater detail with preferred embodiments of the invention and accompanying illustrations. Nevertheless, it should be recognized that the preferred embodiments of the invention are not provided to limit the invention but to illustrate it. The present invention can be practiced not only in the preferred embodiments herein mentioned, but also in a wide range of other embodiments besides those explicitly described. Further, the scope of the present invention is expressly not limited to any particular embodiments except what is specified in the appended Claims.

An embodiment is an implementation or example of the invention. Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. It should be appreciated that in the foregoing description of exemplary embodiments of the invention, various features of the invention are sometimes grouped together in a single embodiment, figure, or description thereof for the purpose of streamlining the disclosure and aiding in the understanding of one or more of the various inventive aspects.

The multi-lens image sensor module of the present invention uses the lid for image division to separate the image sensing area of the image sensor chip into a plurality of subareas. Each lens will capture the image from only one divided subarea, and then the established algorithm is operated to process or synthesize the image from all the divided subareas, therefore obtaining a large visual angle (up to 360°). The present invention requires only one image sensor module to reach the same field of view as that obtained from several image sensor modules, consequently saving the number of the image sensor modules.

The image sensor module of the present invention couples a plurality of lenses via an optical system, extending the distance between the image sensor module and the lenses to enable a wider range of the practical application, and a farther image can be captured based on a farther-distanced lens of the image sensor module. A plurality of lenses is horizontally arranged within the visual angle respectively in order to obtain a complete image of the 360-degree field of view.

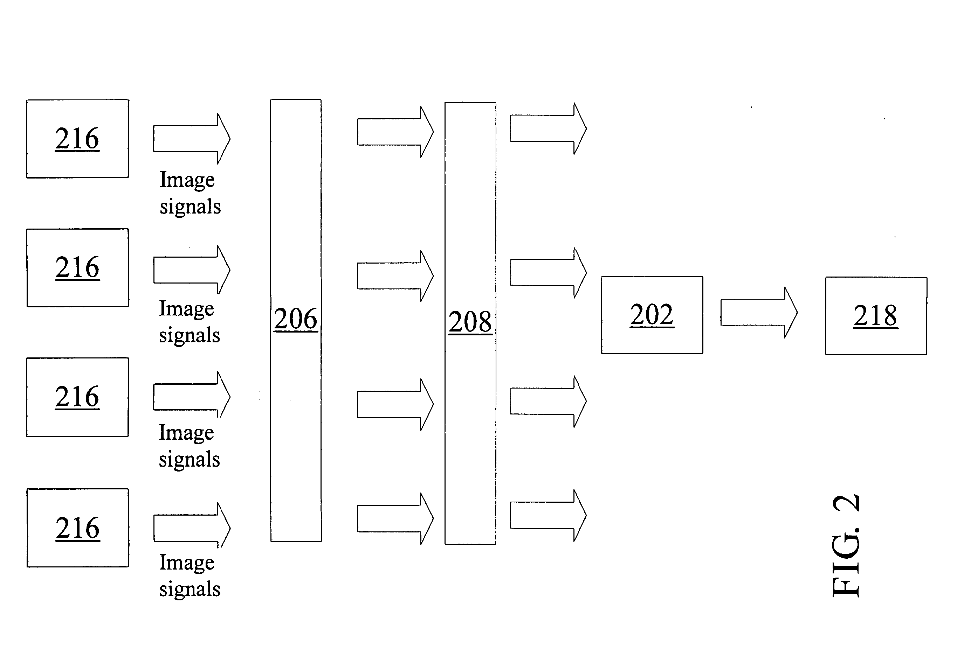

According to a preferred embodiment, the illustration of the multi-lens image sensor module 200 of the present invention is shown in FIG. 2. The image sensor module 200 comprises an image sensor chip 202, an optical system 206, a set of glasses 208, and a plurality of lenses 216.

Image signals from outside are transmitted to the image sensor chip 202 via the optical system 206. The image signals transmitted by the optical system 206 will be divided into separate signals with no mutual interaction through the lid (not shown). The lid will divide the image sensing area of the image sensor chip 202 into a plurality of subareas. Each subarea is corresponding to one lens 216. External image signals sequentially pass through the lenses 216, the optical system 206, the set of glasses 208, and the lid to arrive at the image sensing area of the image sensor chip 202. Each of the said plurality of optical communication paths is individually independent without mutual interaction amongst one another. After the image sensor chip 202 receives the image signals, the optical image signals will be delivered to an analog-digital converter (A/D Converter) 218 to convert the image signals into digital image signals.

In a preferred embodiment, the optical system may be a combination of a convex lens, a concave lens, and a plane mirror. The arrangement of the optical system is well known in the art, therefore the detailed description being omitted. In one embodiment, the optical system may be an optical fiber communication system.

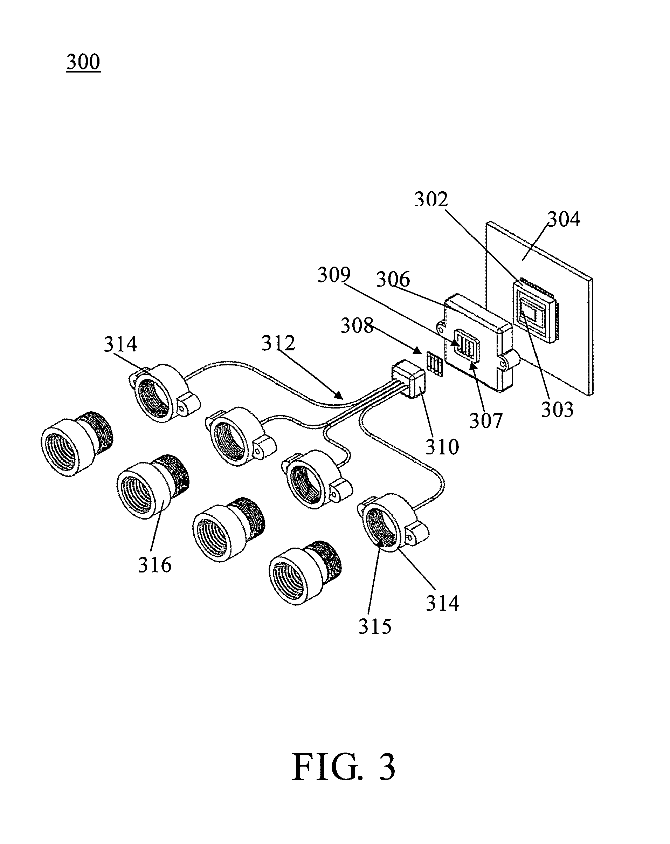

According to a preferred embodiment of the present invention, the parts breakdown illustration of the multi-lens image sensor module 300 is shown in FIG. 3. The multi-lens image sensor module 300 comprises an image sensor chip 302, a base board 304, an image sensor module lid 306, a set of glasses 308, an optical fiber output fixed mount 310, optical fibers 312, a plurality of optical fiber input fixed mounts 314, and a plurality of lenses 316.

The image sensor chip 302 is set on the base board 304, having an image sensing area 303 formed thereon to capture images. The base board 304 is, but not limited to, a multilayer PCB (Printed Circuit Board), and any appropriate circuit board can be applied to the present invention herein. The base board 304 may also include analog and digital circuitry formed thereon (not shown), for example, a DSP (digital signal processor), a memory chip, an ASIC (Application Specific Integrated Circuit) chip, and passive components. The image sensing area 303 of the image sensor chip 302 receives optical signals, and the analog image signals are converted into digital image signals by the DSP and the ASIC chip, then the digital image signals will be stored in the memory chip.

The image sensor chip 302 may include a CCD (Charge-Coupled Device) or a CMOS (Complementary Metal-Oxide-Semiconductor) sensor chip. A CCD is a semiconductor that can record the change of the light in a digital still camera, usually denoted as megapixel, and its material is primarily silicon semiconductor, which is capable of converting the light on the surface of a photosensitive element into storage electric charges. As the surface of a CCD senses the light illuminating, an electric charge is correspondingly produced thereon, following that it is transmitted to an amplifying and decoding element to restore all the signals produced by the photosensitive element on a CCD, and a full picture is thus constructed. A CMOS image sensor chip is a semiconductor that can record the change of the light in a digital still camera as well. But the manufacturing technology of a CMOS is different from that of a CCD, and it is closer to that of common computer chips instead. The material of a CMOS is primarily made of silicon and germanium, and its image sensor module utilizes the current to process the chip in order to record and interpret signals as an image.

The image sensor module lid 306 is arranged on the image sensor chip 302, and it is mounted on the base board 304. The image sensor module lid 306 has an opening 307 corresponding to the image sensing area 303 of the image sensor chip 302. The image sensor chip 302 captures external images via the opening 307. The lid 306 has a plurality of sidewalls 309 to divide the opening 307 into a plurality of openings 307, the image sensing area 303 consequentially being divided into a plurality of subareas. In this embodiment, the image sensing area is divided into four subareas by the image sensor module lid 306, but not necessarily four.

A set of glasses 308 and an optical fiber output fixed mount 310 are arranged on the openings 307 of the lid 306. The set of the glasses 308 having a plurality of glasses corresponds exactly to the plurality of the openings 307 respectively. The space amongst the optical fiber output fixed mount 310, the set of glasses 308, the lid 306, and the base board 307 may be a vacuum or filled with low humidity gases (nitrogen or argon) to prevent the moisture from entering it, which avoids affecting the sensing capability of the image sensor chip. The optical fiber output fixed mount 310 is connected to the individual optical fiber input fixed mounts 314 via optical fibers 312. The openings 315 of optical fiber input fixed mounts 314 have internal threads to screw in the lenses 316.

External optical signals are transmitted via the optical fibers to the image sensing area 303 on the image sensor chip 302 by the multi-lens image sensor module 300. Excellent communication efficiency can be achieved by transmitting optical signals via optical fibers. The paths between the lenses 316 and the image sensing area 303 are separate, not interfering with one another during signal transmission.

The multi-lens image sensor module of the present invention has extended the distance between the lenses and the image sensing area, hence enabling the optical fiber input fixed mounts 314 and the lenses 316 to be located at a far distance from the image sensor chip 302 and the base board 304, consequently, any desired position being able to be chosen for the lenses, particularly those too narrow a space to be equipped with an entire image sensor module.

The image sensing area 303 on the image sensor chip 302 is divided into a plurality of subareas by the image sensor module lid, and each lens 316 is merely responsible for the partial sensing area, therefore enabling a 360-degree large visual angle to be obtained. In this embodiment, the number of the lenses is four, but not necessarily four, and any suitable number of lenses is applicable in the present invention herein.

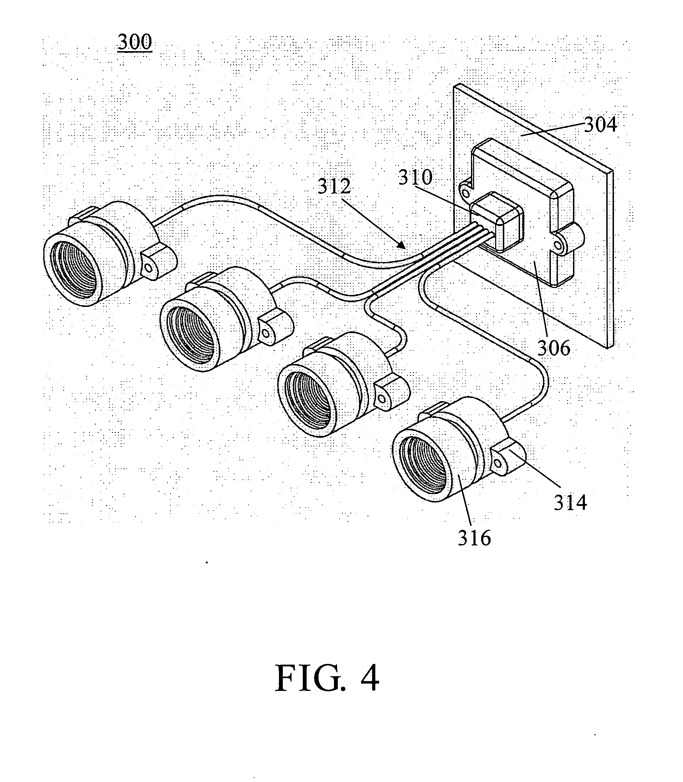

According to an embodiment of the present invention, the parts breakdown illustration of the multi-lens image sensor module 300 is shown in FIG. 4. In a preferred embodiment, the multi-lens image sensor module 300 is applicable in equipments requiring a 360-degree visual angle, such as a walkable and orienting robot or any measuring distance occasions. In the horizontal direction, each lens 316 is arranged by the optical fiber at a specific position to share a 90-degree visual angle respectively, thus enabling the multi-lens image sensor module 300 to obtain a 360-degree visual angle as a whole. In a preferred embodiment, the multi-lens image sensor module 300 may also harness three lenses with each lens' sharing a 120-degree visual angle respectively.

Optical fibers are utilized to transmit optical signals in the present invention, and the lenses are able to be set at any position desired therein. If a complete set of directions of a visual angle is desired in the prior art, then a plurality of image sensor modules is required to be arranged in many directions individually. Only one image sensor module is necessary to fulfill a complete set of directions of a visual angle in the multi-lens image sensor module of the present invention herein.

The preferred embodiments are described above to illustrate the invention herein, but are not provided to limit the Claims declared in the present invention. What is claimed depends on the Claims appended and the equivalent field. It will be apparent to those skilled in the art that changes or modifications may be made from any of the described messages without departing from the spirit of the invention, but are included in the equivalent design or modifications under the scope of the present invention, being circumscribed by the following Claims.

## Claims

1. A multi-lens image sensor module comprising:
a base board;
an image sensor chip having an image sensing area formed thereon bonded to said base board;
a lid formed on said base board, covering said image sensor chip thereon, said lid having a plurality of openings corresponding to said image sensing area that is divided into a plurality of subareas according to said plurality of openings;
an optical system coupled to said lid, including a combination of a convex lens, a concave lens, and a plane mirror; and
a plurality of lenses coupled to said optical system, each said lens being corresponding to one said opening, and the image signals being transmitted to the corresponding subarea of said image sensing area via said optical system.

2. The module of claim 1, wherein said multi-lens image sensor module further includes a set of glasses arranged on said plurality of openings.

3. The module of claim 1, wherein multi-lens image sensor module further includes an optical signal output fixed mount covering said plurality of openings of said lid.

4. The module of claim 3, wherein multi-lens image sensor module further includes a plurality of optical signal input fixed mounts connected to said optical signal output fixed mount.

5. The module of claim 4, wherein said plurality of lenses is individually arranged in said plurality of optical signal input fixed mounts.

6. The module of claim 1, wherein said base board is a multilayer PCB (Printed Circuit Board).

7. The module of claim 1, wherein said image sensor chip includes a CCD (Charge-Coupled Device) or a CMOS (Complementary Metal-Oxide-Semiconductor) sensor chip.

8. The module of claim 1, wherein the number of said lenses is at least three.

9. The module of claim 1, wherein said multi-lens image sensor module has a 360-degree visual angle.

10. The module of claim 1, wherein said optical system includes an optical fiber communication system.

11. A multi-lens image sensor module comprising:
a base board;
an image sensor chip having an image sensing area formed thereon bonded to said base board;
a lid formed on said base board, covering said image sensor chip thereon, said lid having a plurality of openings corresponding to said image sensing area that is divided into a plurality of subareas according to said plurality of openings;
a set of glasses arranged on said plurality of openings;
an optical fiber output fixed mount covering said plurality of openings of said lid;
a plurality of optical fiber input fixed mounts connected to said optical fiber output fixed mount via optical fibers; and
a plurality of lenses individually arranged in said plurality of optical fiber input fixed mounts, each said lens being corresponding to one said opening, and the image signals being transmitted to the corresponding subarea of said image sensing area via said optical fibers.

12. The module of claim 11, wherein said base board is a multilayer PCB (Printed Circuit Board).

13. The module of claim 11, wherein said image sensor chip includes a CCD (Charge-Coupled Device) or a CMOS (Complementary Metal-Oxide-Semiconductor) sensor chip.

14. The module of claim 11, wherein the number of said lenses is at least three.

15. The module of claim 11, wherein said multi-lens image sensor module has a 360-degree visual angle.
